# EUROPEAN PATENT SPECIFICATION

(11) **EP 4 220 973 B1**
(45) Date of publication and mention of the grant of the patent: **11.02.2026**
(21) Application number: 21870954.1
(22) Date of filing: 09.07.2021
(51) Int. Cl.: H04B 1/40, H04B 7/0413, H04B 1/00

(54) **RADIO FREQUENCY SYSTEM AND COMMUNICATION DEVICE**
FUNKFREQUENZSYSTEM UND KOMMUNIKATIONSVORRICHTUNG
SYSTÈME À RADIOFRÉQUENCE ET DISPOSITIF DE COMMUNICATION

(30) Priority: 27.09.2020 CN 202011032759
(43) Date of publication of application: 02.08.2023
(73) Proprietor: GUANGDONG OPPO MOBILE TELECOMMUNICATIONS CORP., LTD., Dongguan, Guangdong 523860 (CN)
(72) Inventor: WANG, Guolong, Dongguan, Guangdong 523860 (CN)
(74) Representative: Taor, Simon Edward William
(86) International application number: PCT/CN2021/105365
(87) International publication number: WO 2022/062575

(56) References cited:
- CN-A- 108 649 971
- CN-A- 108 923 793
- CN-A- 108 964 677
- CN-A- 109 861 735
- CN-A- 110 518 931
- CN-A- 110 572 178
- CN-A- 112 187 311
- US-A1- 2019 288 717
- US-A1- 2021 143 844

## Description

### CROSS-REFERENCE TO RELATED APPLICATION

The present application claims a priority to Chinese Patent Application No. 202011032759X, entitled "RADIO-FREQUENCY SYSTEM AND COMMUNICATION DEVICE", and filed with China National Intellectual Property Administration on September 27, 2020.

### FIELD

The present disclosure relates to the field of radio-frequency technologies, and more particularly, to a radio-frequency system and a communication device.

### BACKGROUND

The statements herein provide only background information relevant to the present disclosure and do not necessarily constitute exemplary related art.

With the development and advancement of technology, a high integration level and miniaturization of devices have become a development trend to cope with the increasing demands of various network standards and to solve a problem of a space strain on a Printed Circuit Board (PCB) layout. From initial Phase2 products that only support a single frequency band to Phase7 products that support integration of various standards, the integration level of devices becomes increasingly higher, while a package size of devices also becomes increasingly smaller. For example, the Phase7 product, in which a diversity reception device for supporting middle and high frequency bands of Long-Term Evolution (LTE) signals is applied to a radio-frequency transceiving system to support a Multiple Input Multiple Output (MIMO) function of a 5-th Generation (5G) mobile communication technology New Radio (NR) signal, requires high costs and occupies a large space. CN108964677A discloses a radio frequency system, which supports a simultaneous downlink reception with four antennas and includes at least two antenna groups, a radio frequency processing circuit, and a radio frequency transceiver. CN110572178A discloses a network radio frequency structure including: a radio frequency transceiver; a first radio frequency module connected with the radio frequency transceiver and connected with the first antenna and the second antenna through a first DPDT switch; a second radio frequency module connected with the radio frequency transceiver and connected with the third antenna and the fourth antenna through the first switch unit. US2019288717A1 discloses a multi-way switch including five T ports and four P ports and configured to be coupled with a radio frequency circuit and an antenna system of a wireless communication device.

### SUMMARY

According to embodiments of the present disclosure, a radio-frequency system and a communication device are provided. The invention is defined by the features of the independent claim 1. Further embodiments are presented in the dependent claims.

A radio-frequency system includes a radio-frequency transceiver, a first transceiving module, a receiving module, a first Multiple Input Multiple Output (MIMO) receiving module, a second MIMO receiving module, a first antenna, a second antenna, a third antenna, and a fourth antenna. The radio-frequency transceiver is connected to the first antenna via the first transceiving module to form a first MIMO receiving channel for 5-th Generation mobile communication technology (5G) signals. The radio-frequency transceiver is connected to the second antenna via the receiving module to form a second MIMO receiving channel for 5G signals. Each of the first transceiving module and the receiving module has at least four receiving paths configured to support reception of 5G signals in four predetermined frequency bands. The radio-frequency transceiver is connected to the third antenna via the first MIMO receiving module to form a third MIMO receiving channel for 5G signals. The radio-frequency transceiver is connected to the fourth antenna via the second MIMO receiving module to form a fourth MIMO receiving channel for 5G signals. Each of the first MIMO receiving module and the second MIMO receiving module has four receiving paths configured to support the reception of 5G signals in the four predetermined frequency bands. The first transceiving module further has a plurality of transmitting channels configured to support transmission of 5G signals in a plurality of predetermined frequency bands. The radio-frequency system further includes: a switching module connected to the first transceiving module, the receiving module, the first MIMO receiving module, the second MIMO receiving module, the first antenna, the second antenna, the third antenna, and the fourth antenna, the switching module being configured to switch on a transmitting path between the radio-frequency transceiver and each of the first antenna, the second antenna, the third antenna, and the fourth antenna, enabling the radio-frequency system to support a 1T4R Sounding Reference Signal (SRS) function.

A communication device includes the radio-frequency system as described above.

One or more of the embodiments of the present disclosure are described in detail below in combination with the accompanying drawings. Other features, objects and advantages of the present disclosure will become apparent from the specification, the accompanying drawings, and the claims as attached.

### BRIEF DESCRIPTION OF THE DRAWINGS

In order to clearly explain technical solutions of embodiments of the present disclosure or in the related art, drawings used in description of the embodiments or the related art will be briefly described below. The drawings described below merely illustrate some embodiments of the present disclosure. Based on these drawings, other drawings can be obtained by those skilled in the art without creative effort.
FIG. 1 is a first schematic diagram of a framework of a radio-frequency system.
FIG. 4 is a third schematic diagram of a first MIMO receiving module.
FIG. 5 is a fourth schematic diagram of a first MIMO receiving module.
FIG. 6a is a schematic diagram of pins of a first MIMO receiving module of FIG. 4.
FIG. 6b is a schematic diagram of a package structure of a first MIMO receiving module of FIG. 4.
FIG. 7a is a schematic diagram of pins of a first MIMO receiving module of FIG. 5.

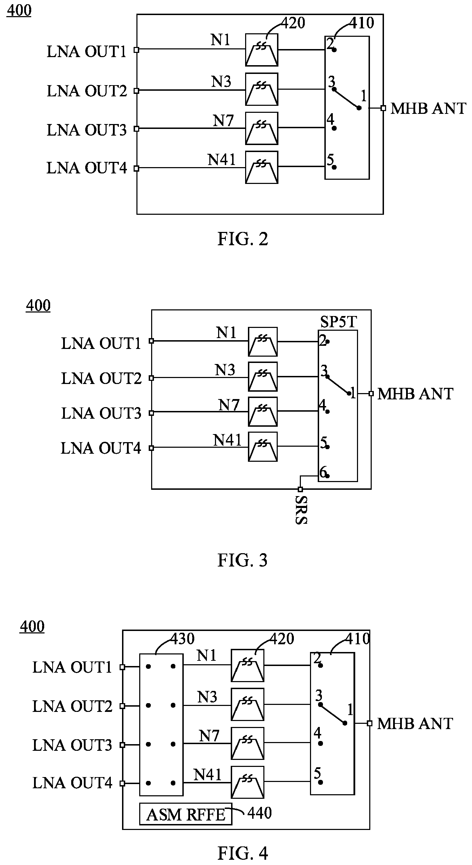

FIG. 2 is a first schematic diagram of a first MIMO receiving module.
FIG. 3 is a second schematic diagram of a first MIMO receiving module.

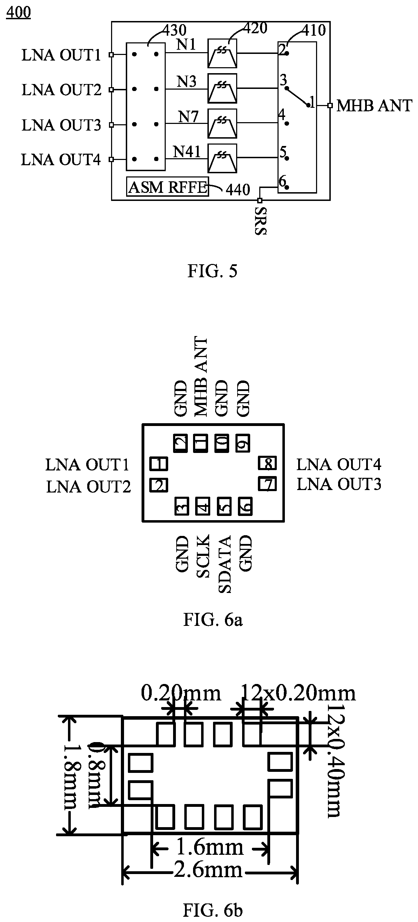

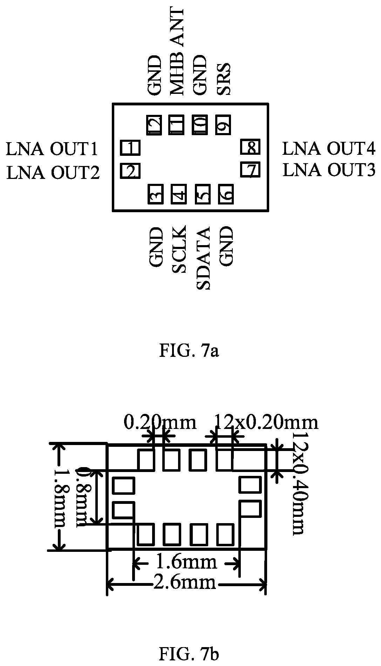

FIG. 7b is a schematic diagram of a package structure of a first MIMO receiving module of FIG. 5.

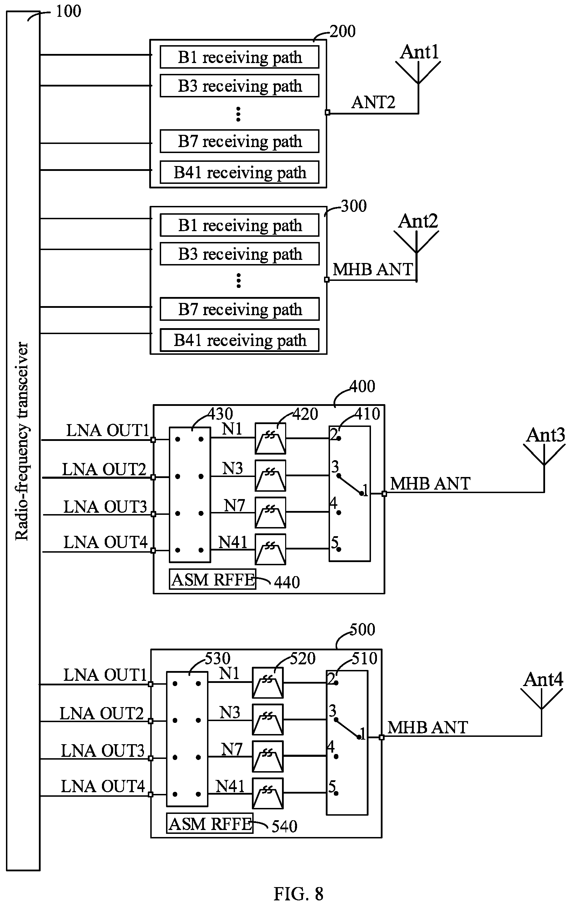

FIG. 8 is a second schematic diagram of an architecture of a radio-frequency system according to an embodiment.

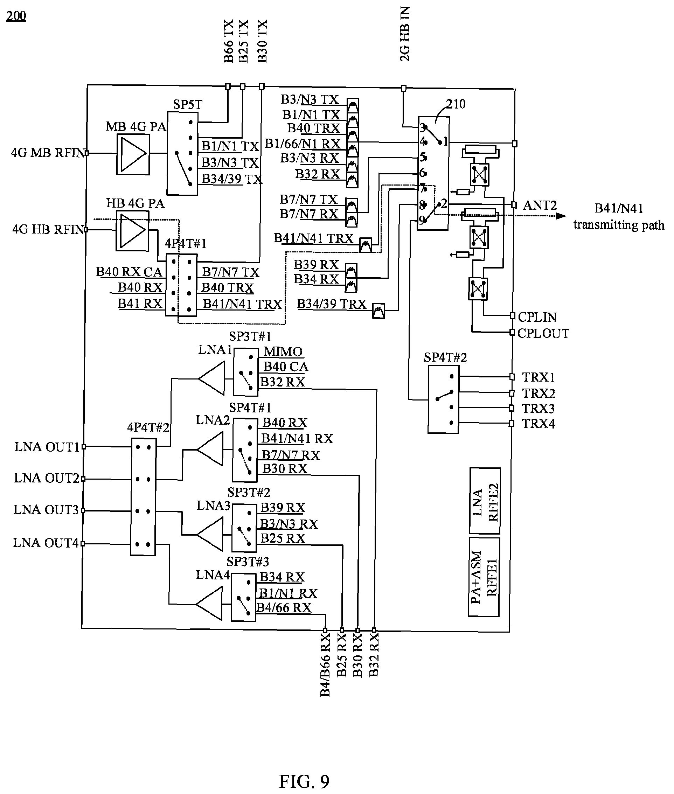

FIG. 9 is a schematic diagram of a framework of a first transceiving module according to an embodiment.

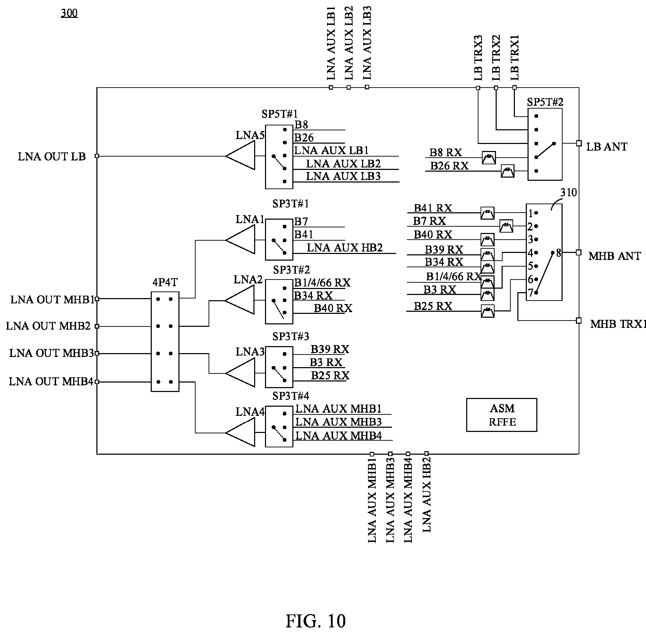

FIG. 10 is a schematic diagram of a framework of a receiving module according to an embodiment.

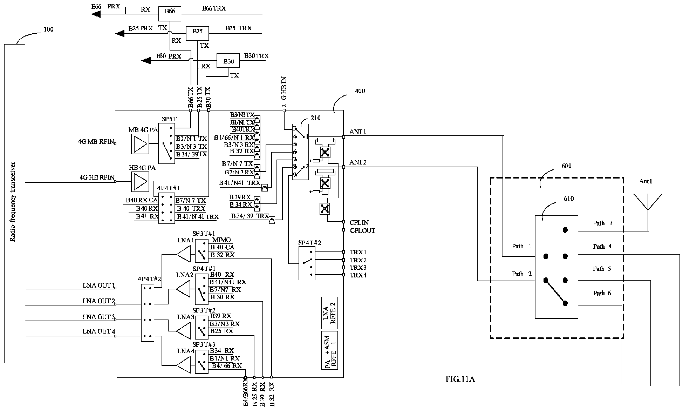

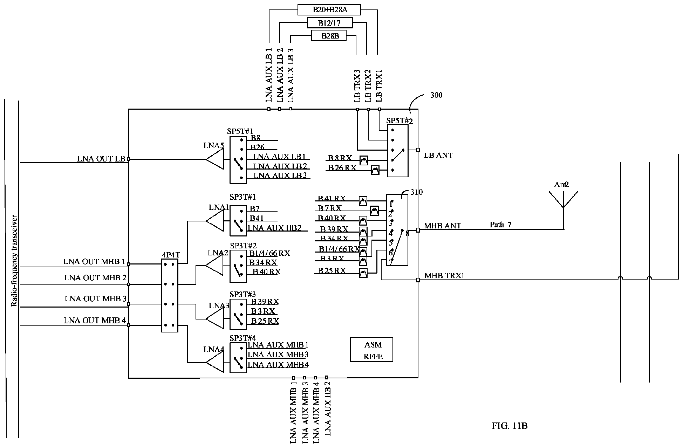

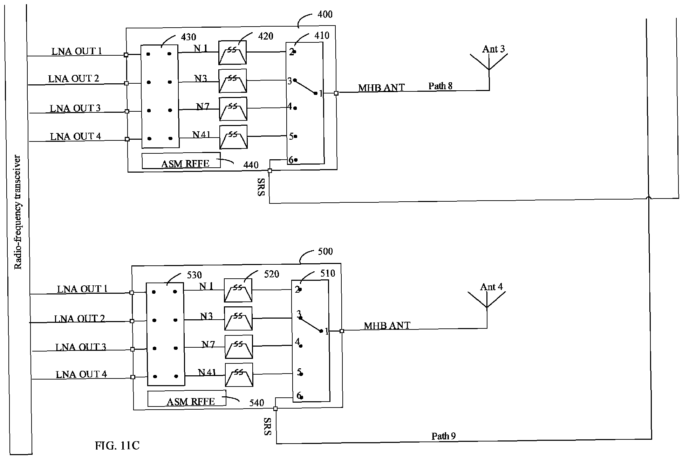

FIG. 11 is a third schematic diagram of a framework of a radio-frequency system according to an embodiment.

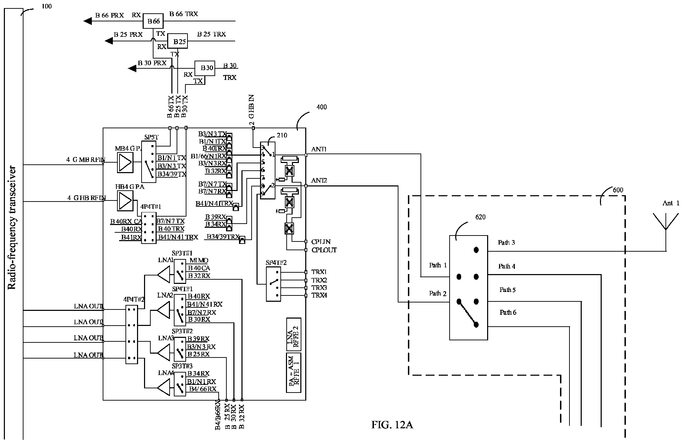

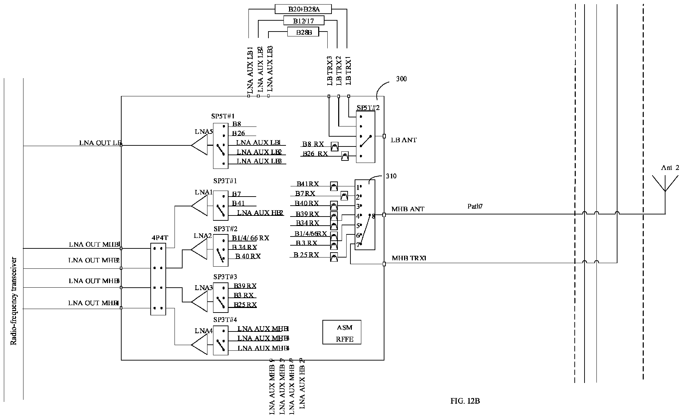

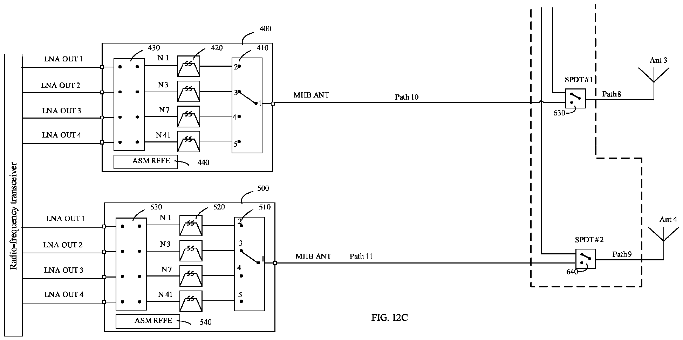

FIG. 12 is a fourth schematic diagram of a framework of a radio-frequency system according to an embodiment.

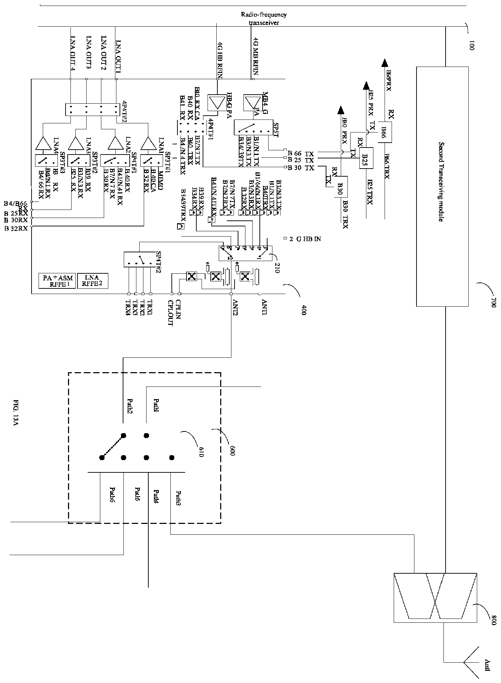

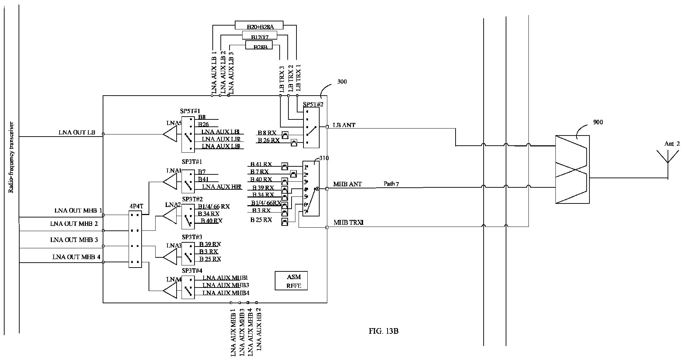

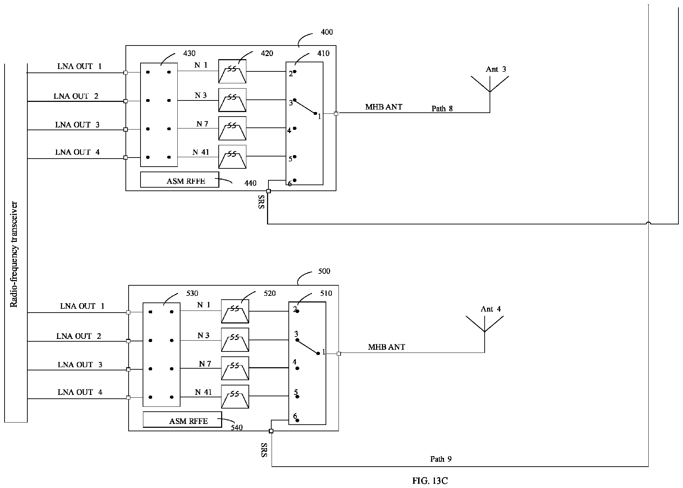

FIG. 13 is a fifth schematic diagram of a framework of a radio-frequency system according to an embodiment.

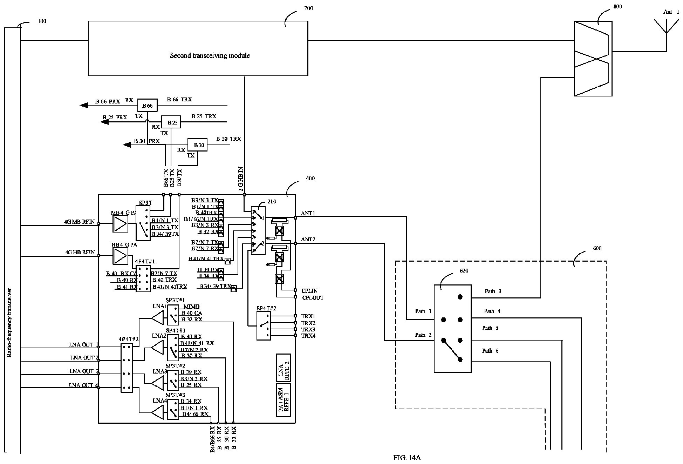

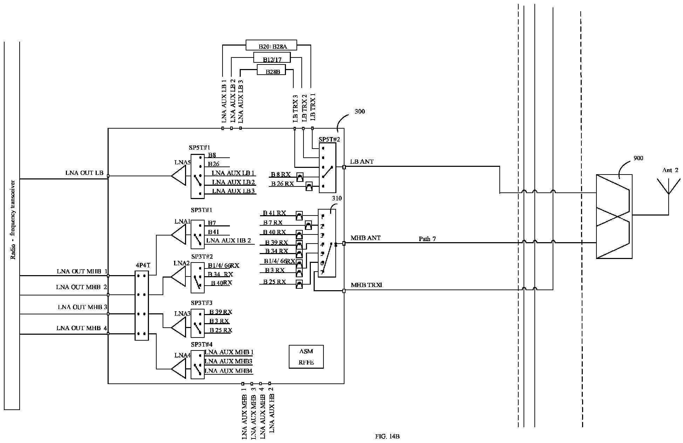

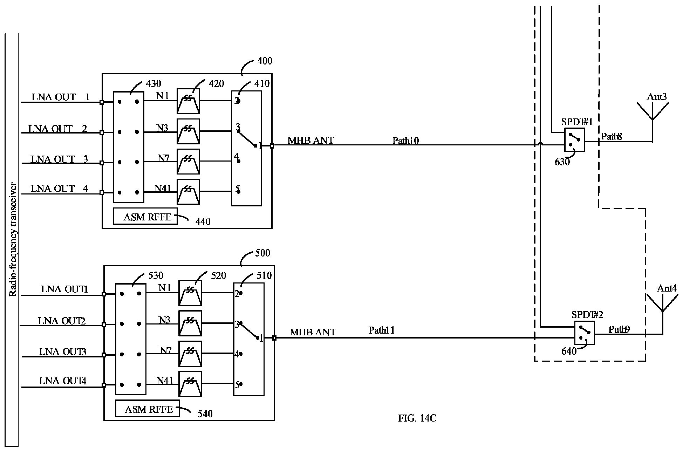

FIG. 14 is a sixth schematic diagram of a framework of a radio-frequency system according to an embodiment.

### DETAILED DESCRIPTION

In order to make objects, technical solutions, and advantages of the present disclosure more apparent, the present disclosure will be described in detail below with reference to the accompanying drawings and embodiments. It should be understood that the embodiments described herein are only used to explain, rather than limiting, the present disclosure.

It should be understood that terms "first", "second", etc., used in the present disclosure may be used herein to describe various elements, but these elements are not limited by these terms. These terms are used only to distinguish one element from another element. For example, without departing from the scope of the present disclosure, a first transceiving module may be referred to as a second transceiving module, and similarly, the second transceiving module may be referred to as the first transceiving module. The first transceiving module and the second transceiving module are different transceiving modules.

In addition, the term "first" or "second" is only for descriptive purposes, rather than indicating or implying relative importance or implicitly indicating the number of indicated technical features. Therefore, the features defined with "first" or "second" can explicitly or implicitly include at least one of the features. In the description of the present disclosure, "plurality of" means at least two, unless otherwise specifically indicated. In the present disclosure, "a number of" means at least one, unless otherwise specifically indicated.

A radio-frequency transceiving system involved in the embodiments of the present disclosure can be applied to a communication device having wireless communication capabilities. The communication device may be a handheld apparatus, a vehicle-mounted apparatus, a wearable apparatus, a computing apparatus, any other processing apparatuses connected to a wireless modem, a user equipment (UE) in various forms (e.g., a mobile phone), or a mobile station (MS), etc. For ease of description, the above-mentioned apparatuses can be collectively referred to as the communication device. A network device may include a base station, an access point, etc.

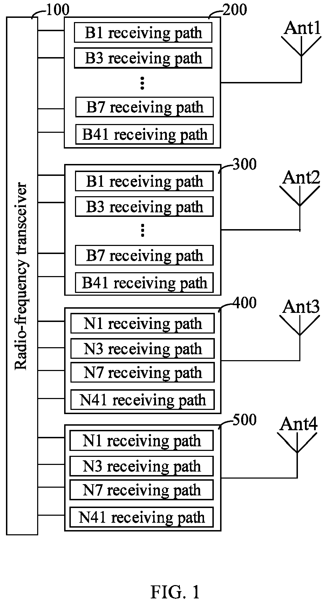

As illustrated in FIG. 1, an embodiment of the present disclosure provides a radio-frequency system. The radio-frequency system can support a 4*4 MIMO function. The MIMO function refers to using a plurality of transmitting antennas at a transmitting port and a plurality of receiving antennas at a receiving port, to sufficiently use space resources, and realizing multiple transmission and multiple reception through the plurality of antennas. In this way, a channel capacity of the system can be manifold increased without increasing spectrum resources and transmitting power of antennas. The communication device and a base station can constitute 2*2 MIMO or 4*4 MIMO. Taking 4*4 MIMO as an example, configurations for antenna ports of receiving paths are shown in Table 1. It should be noted that when receiving performance is tested with protocols stipulated by China Telecommunication Technology Labs (CTTL), all 4 receiving channels are also connected to a radio-frequency transceiver. The 4 receiving channels form a downlink of MIMO and all receive signals from an uplink base station, improving performance of the radio-frequency system.

**[Table 1] Configurations for receiving antenna ports**

| Channel | Channel 0 | Channel 1 | Channel 2 | Channel 3 |
|---|---|---|---|---|
| Antenna port | **PRX** | **DRX** | **PRX MIMO** | **DRX MIMO** |

In Table 1, Channel 0, Channel 1, Channel 2, and Channel 3 can be interpreted as a first MIMO receiving channel, a second MIMO receiving channel, a third MIMO receiving channel, and a fourth MIMO receiving channel, respectively; the antenna port **PRX** (main receiving port) can be interpreted as an antenna port of a first transceiving module; the antenna port **DRX** (diversity receiving port) can be interpreted as an antenna port of a receiving module; the antenna port **PRX MIMO** (main MIMO receiving port) can be interpreted as an antenna port of the first MIMO receiving module; and the antenna port **DRX** MIMO (diversity MIMO receiving port) can be interpreted as an antenna port of the second MIMO receiving module.

At present, the China Mobile mainly adopts a N41 5G frequency band, and thus all communication devices support MIMO in the N41 frequency band. The radio-frequency system according to the embodiments of the present disclosure can support 4*4 MIMO in N1, N3, and N7 frequency bands applied by foreign operators, in addition to MIMO in the N41 frequency band.

In an embodiment, the radio-frequency system includes a radio-frequency transceiver 100, a first transceiving module 200, a receiving module 300, a first MIMO receiving module 400, a second MIMO receiving module 500, a first antenna **Ant1,** a second antenna **Ant2,** a third antenna **Ant3,** and a fourth antenna **Ant4.**

The first antenna **Ant1,** the second antenna **Ant2,** the third antenna **Ant3,** and the fourth antenna **Ant4** can be used to support reception and transmission of radio-frequency signals in different frequency bands. The radio-frequency signals may include 5G signals, 4G signals, 3G signals, 2G signals, etc. The first antenna **Ant1,** the second antenna **Ant2,** the third antenna **Ant3,** and the fourth antenna **Ant4** may be formed by any suitable type of antenna. For example, the first antenna **Ant1,** the second antenna **Ant2,** the third antenna **Ant3,** and the fourth antenna **Ant4** may include an antenna having a resonant element and formed by at least one of the following antenna structures: an array antenna structure, a loop antenna structure, a patch antenna structure, a slot antenna structure, a spiral antenna structure, a strip antenna, a monopole antenna, a dipole antenna, or the like. Different types of antennas can be used for different frequency bands and combinations of frequency bands. In the embodiments of the present disclosure, types of the first antenna **Ant1,** the second antenna **Ant2,** the third antenna **Ant3,** and the fourth antenna **Ant4** are not further limited.

The first transceiving module 200 may have at least four receiving paths to support reception of 5G signals in four predetermined frequency bands. The first transceiving module 200 may be an integrated device, for example, a built-in low noise Middle and High Band Power Amplifier Modules including Duplexers With LNA (MHB L-PA Mid), i.e., a radio-frequency L-PA Mid device. The first transceiving module 200 can also support reception and transmission of middle frequency signals and high frequency signals in a number of frequency bands.

The receiving module 300 has at least four receiving paths to support reception of 5G signals in four predetermined frequency bands. The receiving module 300 may be an integrated device, for example, a Diversity Receive (DRX) module, i.e., a radio-frequency DRX device. The receiving module 300 can also support reception of low frequency signals, middle frequency signals, and high frequency signals in a number of frequency bands.

The four receiving paths of each of the first transceiving module 200 and the receiving module 300 can also implement reception control of 4G LTE signals in a number of middle and high frequency bands, for example, reception control of signals in B1, B3, B7, and B41 frequency bands. Some of the 4G LTE signals are in the same frequency bands (e.g., N1, N3, N7, N41) range as 5G NR signals. That is, the first transceiving module 200 can implement reception control of some 5G NR signals. A relationship between the 5G NR signals and the 4G LTE signals is shown in Table 2, in which receiving channels of N1, N3, N7, and N41 frequency bands of the 5G NR signals are shared with receiving channels of B1, B3, B7, and B41 frequency bands of the 4G LTE signals in one-to-one correspondence.

**[Table 2] Basic information of 4G LTE and 5G NR**

| 4G LTE signals | | | 5G NR signals | | |
|---|---|---|---|---|---|
| Frequency band | Frequency (MHz) | Maximum bandwidth (MHz) | Frequency band | Frequency (MHz) | Maximum bandwidth (MHz) |
| B1 | 1,920~1,980 | 20 | N1 | 1,920~1,980 | 20 MHz |
| B3 | 1,710~1,785 | 20 | N3 | 1,710~1,785 | 20 MHz |
| B7 | 2,500~2,570 | 20 | N7 | 2,500~2,570 | 20 MHz |
| B41 | 2,496~2,690 | 20 | N41 | 2,4962,690 | 100 MHz |

It should be understood that the four receiving paths of each of the first transceiving module 200 and the receiving module 300 can implement reception control of B1, B3, B7, B41, N1, N3, N7, and N41 frequency bands. The B1 and N1 frequency bands share one receiving path, e.g., receiving path B1. The B3 and N3 frequency bands share one receiving path, e.g., receiving path B3. The B7 and N7 frequency bands share one receiving path, e.g., receiving path B7. The B41 and N41 frequency bands share one receiving path, e.g., receiving path B41.

The radio-frequency transceiver 100 is connected to the first antenna **Ant1** via the first transceiving module 200 to form a first MIMO receiving channel for 5G signals. The first MIMO receiving channel can support reception of 5G signals in four predetermined frequency bands. The radio-frequency transceiver 100 is connected to the second antenna **Ant2** via the receiving module 300 to form a second MIMO receiving channel for 5G signals. The second MIMO receiving channel can support reception of 5G signals in four predetermined frequency bands. The radio-frequency transceiver 100 is connected to the third antenna **Ant3** via the first MIMO receiving module 400 to form a third MIMO receiving channel for 5G signals. The radio-frequency transceiver 100 is connected to the fourth antenna **Ant4** via the second MIMO receiving module 500 to form a fourth MIMO receiving channel for 5G signals. Both the first MIMO receiving channel and the second MIMO receiving channel may include four sub-receiving paths, i.e., receiving path B1, receiving path B3, receiving path B7, and receiving path B41.

The first MIMO receiving module 400 and the second MIMO receiving module 500 have each four receiving paths configured to support the reception of the 5G signals in the four predetermined frequency bands. For example, the four receiving paths of each of the first MIMO receiving module 400 and the second MIMO receiving module 500 may be four sub-receiving paths of receiving path N1, receiving path N3, receiving path N7, and receiving path N41, which can be used to support reception of four 5G N1, N3, N7, and N41 frequency bands.

In the above-mentioned radio-frequency system, four MIMO receiving channels can be formed by the first transceiving module 200, the receiving module 300, the first MIMO receiving module 400, the second MIMO receiving module 500, and the four antennas, to enable the radio-frequency system to support a 4*4 MIMO function of 5G signals in the four predetermined frequency bands, thereby satisfying communication needs at inland and abroad. Meanwhile, the first MIMO receiving module 400 and the second MIMO receiving module 500 have each only four receiving paths configured to support the reception of the 5G signals in the four predetermined frequency bands, and thus each receiving path can be utilized, thereby improving use efficiency of the first MIMO receiving module 400 and the second MIMO receiving module 500 as well as lowering the costs. In addition, compared with a diversity reception device supporting middle and high frequency bands of LTE signals, a space occupied by devices can be reduced, while a link loss of the receiving paths can be reduced.

In an embodiment, the first MIMO receiving module 400 and the second MIMO receiving module 500 have each an antenna port **MHB ANT** and four receiving ports **LNA OUT** (1, 2, 3, 4). Each of the first MIMO receiving module 400 and the second MIMO receiving module 500 includes a first switching unit and four filtering units. As illustrated in FIG. 2, the first MIMO receiving module 400 is taken as an example for description. The first MIMO receiving module 400 includes a first switching unit 410 and four filtering units 420. The first switching unit 410 includes a first terminal and four second terminals. The first terminal is connected to the antenna port **MHB ANT.** Each second terminal of the first switching unit 410 is connected to one receiving port **LNA OUT** via one filtering unit 420 to switch on a receiving path between the antenna port **MHB ANT** and any one of the receiving ports **LNA OUT.** That is, the filtering unit 420 is disposed on each receiving path to perform filtering processing on received 5G signals. In addition, frequency bands of 5G signals outputted from the filtering units 420 are different from one another.

The filtering unit 420 may include a filter, which only allows 5G signals in the predetermined frequency bands to transmit. When 5G signals in a plurality of frequency bands include four different frequency bands, i.e., N1, N3, N7, and N41 frequency bands, four filtering units 420 (i.e., four filters) may be provided correspondingly to implement the filtering processing on the four 5G signals. The radio-frequency system can control an on-off state of the first switching unit 410 to transmit the 5G signals in the plurality of frequency bands to any of the filtering units 420. As an example, the filter may be a band-pass filter, a high-pass filter, or the like. It should be noted that a type of a filter in each filtering unit 420 is not further limited in the embodiments of the present disclosure. A suitable filter can be selected based on a frequency band of a 5G signal on which the filtering processing is to be performed.

In an embodiment, the first switching unit 410 is a Single-Pole Four-Throw (SP4T) switch, and the four filtering units 420 may be respectively defined as a first filtering unit 420, a second filtering unit 420, a third filtering unit 420, and a fourth filtering unit 420. As an example, a contact 1 of the SP4T switch, as the first terminal of the first switching unit 410, is connected to the antenna port **MHB ANT;** and contact 2, contact 3, contact 4, and contact 5 of the SP4T switch may be used as the four second terminals of the first switching unit 410. The receiving path N1 is formed by connecting the antenna port **MHB ANT** to one receiving port **LNA OUT1** via the contact 1, the contact 2, and the first filtering unit 420. The receiving path N3 is formed by connecting the antenna port **MHB ANT** to another receiving port **LNA OUT2** via the contact 1, the contact 3, and the second filtering unit 420. The receiving path N7 is formed by connecting the antenna port **MHB ANT** to yet another receiving port **LNA OUT3** via the contact 1, the contact 2, and the third filtering unit 420. The receiving path N41 is formed by connecting the antenna port **MHB ANT** to still yet another receiving port **LNA OUT4** via the contact 1, the contact 2, and the fourth filtering unit 420.

Optionally, the first switching unit 410 may also include a plurality of Single Pole Double Throw (SPDT) switches that can be controlled in a time-sharing manner to switch on any of the receiving paths N1, N3, N7, and N41 at the same moment.

It should be noted that, a specific form of composition of the first switching unit 410 is not further limited in the embodiments of the present disclosure, and it can be set as desired. In addition, the first MIMO receiving module 400 and the second MIMO receiving module 500 may have the identical or different structures.

In an embodiment, each of the first MIMO receiving module 400 and the second MIMO receiving module 500 has only four receiving paths, e.g., the receiving path N1, the receiving path N3, the receiving path N7, and the receiving path N41, which are adapted to support the reception of 5G signals in the four N1, N3, N7, and N41 frequency bands. In this way, the radio-frequency system can support the 4*4 MIMO function of the 5G signals in the plurality of frequency bands.

In an embodiment, each of the first MIMO receiving module 400 and the second MIMO receiving module 500 has the antenna port **MHB ANT,** a polling transmitting port **SRS,** and four receiving ports **LNA OUT.** As illustrated in FIG. 3, the first MIMO receiving module 400 is taken as an example for description. The first switching unit 410 may include a first terminal and five second terminals. In an embodiment, the first switching unit 410 may be a Single-Pole Five-Throw (SP5T) switch. As an example, a contact 1 of the SP5T switch, as the first terminal of the first switching unit 410, is connected to the antenna port **MHB ANT,** and contact 2, contact 3, contact 4, contact 5, and contact 6 of the SP4T switch may be used as the four second terminals of the first switching unit 410. The receiving path N1 is formed by connecting the antenna port **MHB ANT** to one receiving port **LNA OUT1** via the contact 1, the contact 2, and the first filtering unit 420. The receiving path N3 is formed by connecting the antenna port **MHB ANT** to another receiving port **LNA OUT2** via the contact 1, the contact 3, and the second filtering unit 420. The receiving path N7 is formed by connecting the antenna port **MHB ANT** to yet another receiving port **LNA OUT3** via the contact 1, the contact 2, and the third filtering unit 420. The receiving path N41 is formed by connecting the antenna port **MHB ANT** to still yet another receiving port **LNA OUT4** via the contact 1, the contact 2, and the fourth filtering unit 420. The transmitting path is formed by connecting the polling transmitting port **SRS** to the antenna port **MHB ANT** via the contact 6 and the contact 1. The polling transmitting port **SRS** may be connected to the first transceiving module 200 according to any of the above embodiments, and the polling transmitting port **SRS** is configured to receive 5G signals in various frequency bands transmitted by the first transceiving module 200 to transmit the received 5G signals to an antenna connected to the antenna port **MHB ANT** via the transmitting path, thereby achieving the transmission of the 5G signals.

In an embodiment, each of the first MIMO receiving module 400 and the second MIMO receiving module 500 further includes a second switching unit 430. As illustrated in FIG. 4 and FIG. 5, the first MIMO receiving module 400 is taken as an example for description. The second switching unit 430 of the first MIMO receiving module 400 includes four first terminals and four second terminals. The four first terminals are connected to the four filtering units 420 in one-to-one correspondence. The four second terminals are connected to the four receiving ports **LNA OUT1, LNA OUT2, LNA OUT3, LNA OUT4** in one-to-one correspondence. For example, the second switching unit 430 may be a Four-Pole Four-Throw (4P4T) switch. By controlling the 4P4T switch, the first MIMO receiving module 400 and the second MIMO receiving module 500 can be flexibly controlled to output 5G signals in at least one of the four N1, N3, N7, and N41 frequency bands to the radio-frequency transceiver 100.

In an embodiment, each of the first MIMO receiving module 400 and the second MIMO receiving module 500 further includes a control unit. As illustrated in FIG. 4 and FIG. 5, the first MIMO receiving module 400 is taken as an example for description. A control unit 440 of the first MIMO receiving module 400 may be connected to the first switching unit 410 and the second switching unit 430, and the control unit 440 of the first MIMO receiving module 400 may be configured to control the first switching unit 410 and the second switching unit 430 to selectively switch on any of the receiving paths. As an example, the control unit 440 may be a Mobile Industry Processor Interface (MIPI)-Radio Frequency Front End Control Interface (RFFE) control unit or an RFFE control unit, which conforms to control protocols of an RFFE bus. When the first MIMO receiving module 400 and second MIMO receiving module 500 include the MIPI-RFFE control unit as the control unit, the first MIMO receiving module 400 and second MIMO receiving module 500 further have each an input pin **CLK** for clock signals, an input or bidirectional pin **SDATAS** for unidirectional/bidirectional data signals, a power pin **VDD,** a reference voltage pin **VIO,** etc.

In an embodiment, a 5G NR DRX device may be formed by integrating the first switching unit, four filtering units, second switching unit, and control unit of the first MIMO receiving module 400 or the second MIMO receiving module 500 into the same device. That is, the first MIMO receiving module 400 can be interpreted as a first 5G NR DRX device and the second MIMO receiving module 500 can be interpreted as a second 5G NR DRX device. As an example, the first MIMO receiving module 400 is described below. As illustrated in FIG. 4, the respective devices in the 5G NR DRX device are integrated and packaged in the same packaged module. As illustrated in FIG. 6a, the respective pins in the first MIMO receiving module 400 (packaged chip) correspond to a plurality of ports in the first MIMO receiving module 400 in one-to-one correspondence. Through packaging and integration, the first MIMO receiving module 400 has a packaging form illustrated in FIG. 6b. Correspondingly, as illustrated in FIG. 5, the respective devices in the MIMO receiving module 300 are integrated and packaged in the same packaged module. As illustrated in FIG. 7a, the respective pins in the first MIMO receiving module 400 (packaged chip) correspond to the plurality of ports in the first MIMO receiving module 400 in one-to-one correspondence. Through packaging and integration, the first MIMO receiving module 400 has a packaging form illustrated in FIG. 7b.

The first MIMO receiving module 400 and the second MIMO receiving module 500 according to the embodiments of the present disclosure have a high integration level, thereby reducing a space occupied by each device and facilitating the miniaturization of the first MIMO receiving module 400 and the second MIMO receiving module 500. Meanwhile, the costs can be saved, and utilization rate of each device can be improved.

Based on the radio-frequency system illustrated in FIG. 8, the reception control of MIMO operating paths (e.g., Channel 0, Channel 1, Channel 2, and Channel 3) for 4*4 MIMO in the N41 frequency band is briefly described below.

Path Channel 0: first antenna **Ant1**→antenna port **ANT2** of the first transceiving module 200-receiving path N41→radio-frequency transceiver 100.

Path Channel 1: second antenna **Ant2→**antenna port **MHB ANT** of the receiving module 300-receiving path N41→radio-frequency transceiver 100.

Path Channel 2: third antenna **Ant3-antenna** port **MHB ANT** of the first MIMO receiving module 400→first switching unit 410→filtering unit 420→second switching unit 430 →radio-frequency transceiver 100.

Path Channel 3: fourth antenna **Ant4→**antenna port **MHB ANT** of the second MIMO receiving module 500→first switching unit 510→filtering unit 520→second switching unit 530-radio-frequency transceiver 100.

MIMO operation principles of N1, N3, and N7 are similar to that of N41 and will not be described in detail herein.

The radio-frequency system in any of the above embodiments can support 4*4 MIMO in the four N1, N3, N7, and N41 frequency bands. Also, each of the first MIMO receiving module 400 and the second MIMO receiving module 500 has only four receiving paths configured to support the reception of the 5G signals in the four predetermined frequency bands, making each receiving path to be utilized, improving use efficiency of the first MIMO receiving module 400 and the second MIMO receiving module 500, lowering the costs, and decreasing the link loss of the receiving paths.

As illustrated in FIG. 9, in an embodiment, the first transceiving module 200 further has a plurality of transmitting channels configured to support transmission of the 5G signals in the plurality of predetermined frequency bands. The plurality of transmitting paths and the plurality of receiving paths may be arranged in correspondence. As an example, the plurality of transmitting paths can implement transmission control of B1, B3, B7, B41, N1, N3, N7, and N41 frequency bands. The B1 and N1 frequency bands share one transmitting path, e.g., transmitting path B1. The B3 and N3 frequency bands share one transmitting path, e.g., transmitting path B3. The B7 and N7 frequency bands share one transmitting path, e.g., transmitting path B7. The B41 and N41 frequency bands share one transmitting path, e.g., transmitting path B41. In an embodiment, the first transceiving module 200 has a multi-channel selection switch to selectively switch to any of the transmitting paths in the first transceiving module 200 or any of the transmitting paths.

In an embodiment, the first transceiving module 200 has two antenna ports **ANT1**, **ANT2.** The two antenna ports **ANT1**,**ANT2** are configured to transmit 4G/5G signals in different frequency bands. For example, 4G/5G signals in the frequency bands B1/N1 and B3/N3 may be transmitted via the antenna port **ANT1,** and 4G/5G signals in the frequency bands B7/N7 and B41/N41 may be transmitted via the antenna port **ANT2.** The multi-channel selection switch 210 may include two first terminals and a plurality of second terminals. The two first terminals of the multi-channel selection switch 210 may be connected to the two antenna ports **ANT1**,**ANT2** of the first transceiving module 200 in one-to-one correspondence, and the plurality of second terminals of the multi-channel selection switch 210 may be correspondingly connected to the plurality of transmitting paths and the plurality of receiving paths, thereby implementing the reception and transmission control of 4G/5G signals in the plurality of predetermined frequency bands.

Each transmitting path may include a power amplifier (PA), a filter, a radio-frequency switch, and other devices for performing amplification, filtering, and transmission control switching of 4G/5G signals in different frequency bands. Each receiving path may include a radio-frequency switch, a filter, a low noise amplifier, etc., for performing amplification, filtering, and reception control switching of 4G/5G signals in different frequency bands received by the antenna port **MHB ANT**.

The first transceiving module 200 is further configured to receive and transmit 4G signals in other middle and high frequency bands. As an example, the first transceiving module 200 may further be configured to implement reception and transmission control of 4G signals in frequency bands such as B25, B30, B32, B66, and B39.

As illustrated in FIG. 10, the receiving module 300 has an antenna port **MHB ANT** and a transmitting port **MHB TRX1.** The receiving module 300 includes a seventh switching unit 310 and a plurality of receiving circuits. The seventh switching unit 310 includes a first terminal and a plurality of second terminals. The first terminal of the seventh switching unit 310 is connected to the antenna port **MHB ANT.** A part of the plurality of second terminals of the seventh switching unit 310 are connected to the plurality of receiving circuits in one-to-one correspondence. One of the plurality of second terminals other than the part of the plurality of second terminals of the seventh switching unit 310 is connected to the transmitting port **MHB TRX1.** Each receiving circuit may include a radio-frequency switch, a filter, a low noise amplifier, etc., for performing amplification, filtering, and reception control switching of 4G/5G signals in different frequency bands received by the antenna port **MHB ANT.** The seventh switching unit 310 may be a Single-Pole Seven-Throw (SP7T) switch.

The receiving module 300 is further configured to receive 4G signals in other low, middle, and high frequency bands. As an example, the receiving module 300 may further be configured to implement reception and transmission control of 4G signals in frequency bands such as B8, B26, B25, B39, B4, B34, B66, and B40.

The radio-frequency system provides feedback of channel information in two different modes, i.e., Precoding Matrix Indicator (PMI) and Sounding Reference Signal (SRS). In view of standard definition, PMI is a mandatory function for all 5G communication devices, while SRS is an optional function. PMI is a mode that the base station estimates channel information and resource requirements in accordance with a pre-determined mechanism based on a measurement of a terminal and various quantization algorithms, and reports the channel information and the resource requirements to the base station. SRS is a mode that the terminal directly reports the channel information to the base station by means of channel reciprocity. Obviously, SRS is more accurate than PMI. The base station can detect a position of the terminal and a channel quality by transmitting SRS information by means of the communication device. SRS antenna polling transmission is explained in detail below.

1T1R: feeding back information to the base station only at the first antenna **Ant1,** not supporting the SRS polling transmission.

1T4R: transmitting SRS information at the first antenna **Ant1** to the fourth antenna Ant4 in turn, where only one antenna is selected for transmission each time. Currently, Non-Standalone (NSA) networks adopt this mode.

2T4R: transmitting SRS information in turn at the first antenna **Ant1** to the fourth antenna **Ant4,** where two antennas are selected for transmission each time. Currently, Standalone (SA) networks adopt this mode.

In an SRS mode, with an increase in the number of antennas capable of participating in transmitting a reference signal, the channel estimation is more accurate, and thus the corresponding rate can be higher. With the same number of antennas, the SA mode can complete the channel estimation faster than the NSA mode, thereby increasing a network channel estimation speed.

As illustrated in FIG. 11 and FIG. 12, based on the first transceiving module 200 as illustrated in FIG. 9 and the receiving module 300 as illustrated in FIG. 10, the radio-frequency system further includes a switching module 600. The switching module 600 is connected to the first transceiving module 200, the receiving module 300, the first MIMO receiving module 400, the second MIMO receiving module 500, the first antenna **Ant1,** the second antenna **Ant2,** the third antenna **Ant3,** and the fourth antenna **Ant4.** The switching module 600 is configured to switch on a transmitting path between the radio-frequency transceiver 100 and each of the first antenna **Ant1,** the second antenna **Ant2,** the third antenna **Ant3,** and the fourth antenna **Ant4,** enabling the radio-frequency system to support a 1T4R SRS function, i.e., enabling the radio-frequency system to support an SRS function in the SA mode.

In an embodiment, when the first switching unit 410 in each of the first MIMO receiving module 400 and the second MIMO receiving module 500 is an SP5T switch and has the polling transmitting port **SRS,** the switching module 600 of the corresponding radio-frequency system may include a third switching unit 610, as illustrated in FIG. 11. The third switching unit 610 includes two first terminals and four second terminals.

The two first terminals of the third switching unit 610 are connected to two antenna ports **ANT1**,**ANT2** of the first transceiving module 200 in one-to-one correspondence; one second terminal of the third switching unit 610 is connected to the first antenna **Ant1;** another second terminal of the third switching unit 610 is connected to the second antenna **Ant2** via the receiving module 300; yet another second terminal of the third switching unit 610 is connected to the polling transmitting port **SRS** of the first MIMO receiving module 400; the antenna port **MHB ANT** of the first MIMO receiving module 400 is connected to the third antenna **Ant3;** still yet another second terminal of the third switching unit 610 is connected to the polling transmitting port **SRS** of the second MIMO receiving module 500; and the antenna port MHB **ANT** of the second MIMO receiving module 500 is connected to the fourth antenna **Ant4.** In this way, the radio-frequency system can support the 1T4R SRS function.

The third switching unit 610 may be a Double-Pole Four-Throw (DP4T) switch. Contact 1 and contact 2 of the DP4T switch serve as the two first terminals of the third switching unit 610, and contact 3, contact 4, contact 5, and contact 6 of the DP4T switch serve as four second terminals of the third switching unit 610. The contact 1 and contact 2 of the DP4T switch are connected to two antenna ports **ANT1**,**ANT2** of the first receiving module 300, respectively. The contact 3 of the DP4T switch is connected to the first antenna **Ant1.** The contact 4 of the DP4T switch is connected to the transmitting port **MHB TRX1** of the receiving module 300. The antenna port **MHB ANT** of the receiving module 300 is connected to the second antenna **Ant2.** The contact 5 of the DP4T switch is connected to the polling transmitting port **SRS** of the first MIMO receiving module 400. The antenna port MHB ANT of the first MIMO receiving module 400 is connected to the third antenna **Ant3.** The contact 6 of the DP4T switch is connected to the polling transmitting port SRS of the second MIMO receiving module 500. The antenna port MHB ANT of the second MIMO receiving module 500 is connected to the fourth antenna **Ant4.**

The above-mentioned radio-frequency system can support the 4*4 MIMO function in the N1, N3, N7, and N41 frequency bands as well as the SRS function of the N1, N3, N7, and N41 frequency bands in the SA mode. Based on the radio-frequency system illustrated in FIG. 11, operation principles of paths Channel 0, Channel 1, Channel 2, and Channel 3 of N41 RX MIMO are analyzed below.

Path Channel 0: first antenna **Ant1**→path 3→third switching unit 610→path 1→ antenna port **ANT2** of the first transceiving module 200→multi-path selection switch 210→ receiving path N41 (filter, switch, low noise amplifier)→radio-frequency transceiver 100.

Path Channel 1: second antenna **Ant2-path** 7-antenna port **MHB ANT** of the receiving module 300 → receiving path N41 (filter, switch, low noise amplifier) → radio-frequency transceiver 100.

Path Channel 2: third antenna **Ant3-path** 8→antenna port **MHB** ANT of the first MIMO receiving module 400→first switching unit 410→filtering unit 420→second switching unit 430-radio-frequency transceiver 100.

Path Channel 3: fourth antenna **Ant4-path** 9→antenna port **MHB ANT** of the second MIMO receiving module 500→first switching unit 510→filtering unit 520-second switching unit 530-radio-frequency transceiver 100.

MIMO operation principles of N1, N3, and N7 are similar to that of N41, and thus details thereof will not be repeated herein. Operating paths of the frequency bands are shown in Table 3.

**[Table 3] 5G NR MIMO operating paths**

| | N1/N3 | N7/N41 |
|---|---|---|
| Channel 0 | Path 3->Path 1 | Path 3->Path 2 |
| Channel 1 | Path 7 | Path 7 |
| Channel 2 | Path 8 | Path 8 |
| Channel 3 | Path 9 | Path 9 |

Operation principles of SRS of the N41 frequency band in the SA mode will be briefly described based on the radio-frequency system illustrated in FIG. 11.

Radio-frequency transceiver 100 → high frequency transmitting port **MHB TRX14G HB RFIN** of the first transceiving module 200 → transmitting path N41 (power amplifier (PA), switch **4P4T#1,** filter) → multi-channel selection switch 210 → antenna port **ANT2-path** 2-third switching unit 610→path 3→first antenna **Ant1,** for implementing the SRS function; the third switching unit 610→path 4-transmitting port **MHB TRX1** of the receiving module 300-SP7T switch 310 of the receiving module 300-antenna port **MHB ANT** of the receiving module 300-path 7→second antenna **Ant2,** for implementing the SRS function; the third switching unit 610→path 5→polling transmitting port SRS of the first MIMO receiving module 400→first switching unit 410-antenna port **MHB ANT** of the first MIMO receiving module 400→path 8→third antenna **Ant3,** for implementing the SRS function; the third switching unit 610-path 6-polling transmitting port **SRS** of the second MIMO receiving module 500→first switching unit 510→antenna port **MHB ANT** of the second MIMO receiving module 500 → path 9 → fourth antenna **Ant4,** for implementing the SRS function.

SRS operation principles of N1, N3, and N7 are similar to that of N41, and thus details thereof will not be repeated herein. Relevant SRS operating paths are shown in Table 4.

**[Table 4] Detailed path configurations for SRS**

| | N1/N3 | N7/N41 |
|---|---|---|
| Channel 0' | Path 1->Path 3 | Path 2->Path 3 |
| Channel 1' | Path 1->Path 4->Path 7 | Path 2->Path 4->Path 7 |
| Channel 2' | Path 1->Path 5->Path 8 | Path 2->Path 5->Path 8 |
| Channel 3' | Path 1->Path 6->Path 9 | Path 2->Path 6->Path 9 |

In Table 4, Channel 0', Channel 1', Channel 2', and Channel 3' can be interpreted as SRS operating paths.

Referring to FIG. 12, in an embodiment, the first switching unit 410 in each of the first MIMO receiving module 400 and the second MIMO receiving module 500 is an SP4T switch. That is, based on the first MIMO receiving module 400 and the second MIMO receiving module 500 as illustrated in FIG. 4, the switching module 600 of the radio-frequency system may include a fourth switching unit 620, a fifth switching unit 630, and a sixth switching unit 640. The fourth switching unit 620 includes two firs terminals and four second terminals. The two first terminals of the fourth switching unit 620 are connected to the two antenna ports **ANT1, ANT2** of the first transceiving module 200 in one-to-one correspondence. One second terminal of the fourth switching unit 620 is connected to the first antenna **Ant1.** Another second terminal of the fourth switching unit 620 is connected to the second antenna **Ant2** via the receiving module 300. Yet another second terminal of the fourth switching unit 620 is connected to the third antenna **Ant3** via the fifth switching unit 630. Still yet another second terminal of the fourth switching unit 620 is connected to the fourth antenna **Ant4** via the sixth switching unit 640. The fifth switching unit 630 is also disposed on the fourth MIMO receiving channel and connected to the first MIMO receiving module 400. The sixth switching unit 640 is also disposed on the fourth MIMO receiving channel and connected to the second MIMO receiving module 500.

As an example, the fourth switching unit 620 may be a DP4T switch, and the fifth switching unit 630 and the sixth switching unit 640 are both SPDT switches. A contact 1 and a contact 2 of the DP4T switch serve as the two first terminals of the fourth switching unit 620, and a contact 3, a contact 4, a contact 5, and a contact 6 of the DP4T switch serve as the four second terminals of the fourth switching unit 620. The contact 1 and contact 2 of the DP4T switch are connected to the two antenna ports **ANT1**,**ANT2** of the first receiving module 300 in one-to-one correspondence. The contact 3 of the DP4T switch is connected to the first antenna **Ant1.** The contact 4 of the DP4T switch is connected to the transmitting port **MHB TRX1** of the receiving module 300. The antenna port MHB ANT of the receiving module 300 is connected to the second antenna **Ant2.** The contact 5 of the DP4T switch is connected to a contact 2 of the SPDT switch #1. A contact 3 of the SPDT switch #1 is connected to the antenna port MHB ANT of the first MIMO receiving module 400. A contact 1 of the SPDT switch #1 is connected to the third antenna **Ant3.** The contact 6 of the DP4T switch is connected to a contact 2 of the SPDT switch #2. A contact 3 of the SPDT switch #2 is connected to the antenna port MHB ANT of the second MIMO receiving module 500. A contact 1 of the SPDT switch #2 is connected to the fourth antenna **Ant4.**

The above radio-frequency system can support both the 4*4 MIMO function in the N1, N3, N7, and N41 frequency bands and the SRS function of the N1, N3, N7, and N41 frequency bands in the SA mode. Based on the radio-frequency system illustrated in FIG. 12, operation principles of paths Channel 0, Channel 1, Channel 2, and Channel 3 of N41 RX MIMO are analyzed below.

Path Channel 0: first antenna **Ant1**→path 3→fourth switching unit 620-path 1→ antenna port **ANT2** of the first transceiving module 200-multi-path selection switch 210-receiving path N41 (filter, switch, low noise amplifier)-radio-frequency transceiver 100.

Path Channel 1: second antenna Ant2-path 7→antenna port MHB ANT of the receiving module 300 → receiving path N41 (filter, switch, low noise amplifier) → radio-frequency transceiver 100.

Path Channel 2: third antenna Ant3-path 8→SPDT switch #1→path 10-antenna port MHB ANT of the first MIMO receiving module 400→first switching unit 410→filtering unit 420→second switching unit 430-radio-frequency transceiver 100.

Path Channel 3: fourth antenna **Ant4**→path 9-SPDT switch #2-path 11→antenna port MHB ANT of the second MIMO receiving module 500→first switching unit 510→ filtering unit 520→second switching unit 530-radio-frequency transceiver 100.

MIMO operation principles of N1, N3, and N7 are similar to that of N41, and thus details thereof will not be repeated herein. Operating paths of the frequency bands are shown in Table 5.

**[Table 5] 5G NR MIMO operating paths**

| | N1/N3 | N7/N41 |
|---|---|---|
| Channel 0 | Path 3->Path 1 | Path 3->Path 2 |
| Channel 1 | Path 7 | Path 7 |
| Channel 2 | Path 8->Path 10 | Path 8->Path 10 |
| Channel 3 | Path 9->Path 11 | Path 9->Path 11 |

Operation principles of SRS of the N41 frequency band in the SA mode will be briefly described based on the radio-frequency system illustrated in FIG. 12.

Radio-frequency transceiver 100 → high frequency transmitting port **MHB TRX14G HB RFIN** of the first transceiving module 200 → transmitting path N41 (power amplifier (PA), switch **4P4T#1,** filter)→multi-channel selection switch 210→antenna port **MHB ANTANT2 -** path 2→fourth switching unit 620→path 3→first antenna **Ant1,** for implementing the SRS function; the fourth switching unit 620→path 4→transmitting port MHB **TRX1** of the receiving module 300-SP7T switch 310 of the receiving module 300→ antenna port **MHB ANT** of the receiving module 300-path 7→second antenna **Ant2,** for implementing the SRS function; the fourth switching unit 620-path 5-SPDT switch #1→ path 8-third antenna **Ant3,** for implementing the SRS function; the fourth switching unit 620 -path 6→SPDT switch **#2**→fourth antenna **Ant4,** for implementing the SRS function.

SRS operation principles of N1, N3, and N7 are similar to that of N41, and thus details thereof will not be repeated herein. Relevant SRS operating paths are shown in Table 6.

**[Table 6] Detailed path configurations for SRS**

| | N1/N3 | N7/N41 |
|---|---|---|
| Channel 0' | Path 1->Path 3 | Path 2->Path 3 |
| Channel 1' | Path 1->Path 4->Path 7 | Path 2->Path 4->Path 7 |
| Channel 2' | Path 1->Path 5->Path 8 | Path 2->Path 5->Path 8 |
| Channel 3' | Path 1->Path 6->Path 9 | Path 2->Path 6->Path 9 |

In Table 6, Channel 0', Channel 1', Channel 2', and Channel 3' can be interpreted as SRS operating paths.

It should be noted that, when the first transceiving module 200 in the embodiments of the present disclosure is an MHB L-PA Mid device supporting only the SA mode, the radio-frequency system also only supports the SRS function in the SA mode, correspondingly. When the first transceiving module 200 in the embodiments of the present disclosure can support both the NSA mode and the SA mode, the radio-frequency system can also support the SRS function in both the NSA mode and the SA mode, correspondingly.

The radio-frequency systems illustrated in FIG. 11 and FIG. 12 can support the 4*4 MIMO function in the N1, N3, N7, and N41 frequency bands as well as the SRS function of the N1, N3, N7, and N41 frequency bands in the SA mode. In addition, in the radio-frequency system illustrated in FIG. 11, by providing the polling transmitting port SRS in the first MIMO receiving module 400 and the second MIMO receiving module 500, the number of switches in the switching module 600 can be reduced. For example, the fifth switching unit 630 and the sixth switching unit 640 illustrated in FIG. 12 can be omitted. Thus, the radio-frequency system illustrated in FIG. 11 has a simpler structure. In addition, wiring complexity of the radio-frequency system is simplified, and an occupied area is small, thereby facilitating the miniaturization of the radio-frequency system and lowering the costs thereof.

As illustrated in FIG. 13 and FIG. 14, in an embodiment, the radio-frequency system in any of the above embodiments may further include a second transceiving module 700, a first combiner 800, and a second combiner 900. The first combiner 800 is connected to the second transceiving module 700, the switching module 600, and the second antenna **Ant2.** The second combiner 900 is connected to the receiving module 300 and the third antenna **Ant3.**

The second transceiving module 700 is connected to the first transceiving module 200 and configured to support reception and transmission of radio-frequency signals in a plurality of low frequency bands. As an example, the first transceiving module 200 may be configured to support reception and transmission control of 4G signals in low frequency bands. For example, the first transceiving module 200 may be a built-in low noise Low Band Power Amplifier Modules including Duplexers With LNA (LB L-PA Mid), which can be interpreted as a packaged chip integrating transmitting and receiving channels for a plurality of frequency bands, including B8, B12, B20, B26, 2G LB, and 2G HB GSM. In addition, there are 4 AUX ports for external frequency band expansion.

In addition to supporting the 4*4 MIMO function in the N1, N3, N7, and N41 frequency bands, the radio-frequency system according to the present embodiment can support the SRS function of the N3, N7, and N41 frequency bands in the SA mode, and it can also implement reception and transmission control of signals in B8, B12, B20, B26, 2G LB, and 2G HB GSM through the first transceiving module 200 and the first antenna **Ant1,** thereby expanding communication frequency bands of the radio-frequency system and improving communication performance of the radio-frequency system.

According to the embodiments of the present disclosure, a communication device is further provided. The communication device has the radio-frequency system according to any of the above embodiments that can support the 4*4 MIMO function in the N1, N3, N7, and N41 frequency bands as well as the SRS function of the N1, N3, N7, and N41 frequency bands in the SA mode. In the meantime, each of the first MIMO receiving module 400 and the second MIMO receiving module 500 has only four receiving paths for supporting the reception of the 5G signals in the four predetermined frequency bands, and thus each receiving path can be utilized. In this way, the use efficiency of the first MIMO receiving module 400 and the second MIMO receiving module 500 can be improved, the costs can be lowered, and a link loss of the receiving paths can be reduced.

Although several embodiments of the present disclosure have been described above in a specific and detailed manner, the protection scope of the present disclosure shall not be construed as being limited to these embodiments. It should be noted that, those skilled in the art can make various variants and improvements without departing from the concept of the present disclosure, and these variants and improvements shall fall within the protection scope of present disclosure as defined by the claims as attached.

## Claims

1. A radio-frequency system comprising:
a radio-frequency transceiver (100);
a first transceiving module (200);
a receiving module (300);
a first Multiple Input Multiple Output (MIMO) receiving module (400);
a second MIMO receiving module (500);
a first antenna;
a second antenna;
a third antenna; and
a fourth antenna, wherein:
the radio-frequency transceiver (100) is connected to the first antenna via the first transceiving module (200) to form a first MIMO receiving channel for 5-th Generation mobile communication technology (5G) signals;
the radio-frequency transceiver (100) is connected to the second antenna via the receiving module (300) to form a second MIMO receiving channel for 5G signals, wherein each of the first transceiving module (200) and the receiving module (300) has at least four receiving paths configured to support reception of 5G signals in four predetermined frequency bands;
the radio-frequency transceiver (100) is connected to the third antenna via the first MIMO receiving module (400) to form a third MIMO receiving channel for 5G signals; and
the radio-frequency transceiver (100) is connected to the fourth antenna via the second MIMO receiving module (500) to form a fourth MIMO receiving channel for 5G signals, wherein each of the first MIMO receiving module (400) and the second MIMO receiving module (500) has four receiving paths configured to support the reception of 5G signals in the four predetermined frequency bands;
wherein the first transceiving module (200) further has a plurality of transmitting channels configured to support transmission of 5G signals in a plurality of predetermined frequency bands; and
wherein the radio-frequency system further comprises:
a switching module (600) connected to the first transceiving module (200), the receiving module (300), the first MIMO receiving module (400), the second MIMO receiving module (500), the first antenna, the second antenna, the third antenna, and the fourth antenna, the switching module (600) being configured to switch on a transmitting path between the radio-frequency transceiver (100) and each of the first antenna, the second antenna, the third antenna, and the fourth antenna, enabling the radio-frequency system to support a 1T4R Sounding Reference Signal , SRS, function.

2. The radio-frequency system according to claim 1, wherein:
each of the first MIMO receiving module (400) and the second MIMO receiving module (500) has an antenna port and four receiving ports;
each of the first MIMO receiving module (400) and the second MIMO receiving module (500) comprises a first switching unit (410) and four filtering units (420);
the first switching unit (410) has a first terminal connected to the antenna port and a plurality of second terminals, each of some of the plurality of second terminals is connected to one of the four receiving ports via one of the four filtering units (420); and
frequency bands of radio-frequency signals outputted by the four filtering units (420) are different from each other.

3. The radio-frequency system according to claim 2, wherein the first switching unit (410) is a Single-Pole Four-Throw (SP4T) , SP4T, switch

4. The radio-frequency system according to claim 2, wherein each of the first MIMO receiving module (400) and the second MIMO receiving module (500) further has a polling transmitting port, and wherein the remaining second terminals of the plurality of second terminals of the first switching unit (410) are connected to the polling transmitting port, and preferably, the first switching unit (410) is a Single-Pole Five-Throw , S5PT, switch.

5. The radio-frequency system according to claim 2, wherein each of the first MIMO receiving module (400) and the second MIMO receiving module (500) further comprises:
a second switching unit (430) having four first terminals and four second terminals, the four first terminals being connected to the four filtering units (420) in one-to-one correspondence, and the four second terminals being connected to the four receiving ports in one-to-one correspondence, and
preferably, the second switching unit (430) is a Four-Pole Four-Throw , 4P4T, switch.

6. The radio-frequency system according to claim 1, wherein:
each of the first MIMO receiving module (400) and the second MIMO receiving module (500) has an antenna port and a polling transmitting port;
the switching module (600) comprises a third switching unit (610) having two first terminals and four second terminals; and
the two first terminals of the third switching unit (610) are connected to two antenna ports of the first transceiving module (200) in one-to-one correspondence, one of the four second terminals of the third switching unit (610) is connected to the first antenna, another one of the four second terminals of the third switching unit (610) is connected to the second antenna via the receiving module (300), yet another one of the four second terminals of the third switching unit (610) is connected to the polling transmitting port of the first MIMO receiving module (400), still yet another one of the four second terminals of the third switching unit (610) is connected to the polling transmitting port of the second MIMO receiving module (500), the antenna port of the first MIMO receiving module (400) is connected to the third antenna, and the antenna port of the second MIMO receiving module (500) is connected to the fourth antenna, thereby enabling the radio-frequency system to support the 1T4R SRS function.

7. The radio-frequency system according to claim 1, wherein:
the switching module (600) comprises a fourth switching unit (620), a fifth switching unit (630), and a sixth switching unit (640);
the fourth switching unit (620) has two first terminals connected to two antenna ports of the first transceiving module (200) in one-to-one correspondence, and four second terminals, one of the four second terminals of the fourth switching unit (620) being connected to the first antenna, another one of the four second terminals of the fourth switching unit (620) being connected to the second antenna via the receiving module (300), yet another one of the four second terminals of the fourth switching unit (620) being connected to the third antenna via the fifth switching unit (630), and still yet another one of the four second terminals of the fourth switching unit (620) being connected to the fourth antenna via the sixth switching unit (640);
the fifth switching unit (630) is disposed on the fourth MIMO receiving channel and connected to the first MIMO receiving module (400); and
the sixth switching unit (640) is disposed on the fourth MIMO receiving channel and connected to the second MIMO receiving module (500).

8. The radio-frequency system according to claim 7, wherein:
the fifth switching unit (630) has two first terminals connected to the fourth switching unit (620) and the antenna port of the first MIMO receiving module (400) in one-to-one correspondence, and a second terminal connected to the third antenna; and
the sixth switching unit (640) has two first terminals connected to the fourth switching unit (620) and the antenna port of the second MIMO receiving module (500) in one-to-one correspondence, and a second terminal connected to the fourth antenna.

9. The radio-frequency system according to claim 6 or 7, wherein:
the receiving module (300) has an antenna port and a transmitting port;
the receiving module (300) comprises a seventh switching unit (310) and a plurality of receiving circuits;
the seventh switching unit (310) has a first terminal connected to the second antenna via the antenna port, and a plurality of second terminals, a part of the plurality of second terminals of the seventh switching unit (310) being connected to the plurality of receiving circuits in one-to-one correspondence, and one of the plurality of second terminals other than the part of the plurality of second terminals of the seventh switching unit (310) being connected to the transmitting port.

10. The radio-frequency system according to claim 1, wherein the receiving module (300) is further configured to support reception of radio-frequency signals in a plurality of low frequency bands; and
wherein the radio-frequency system further comprises:
a second transceiving module (700) connected to the radio-frequency transceiver (100) and the first transceiving module (200), the second transceiving module (700) being configured to support reception and transmission of the radio-frequency signals in the plurality of low frequency bands;
a first combiner (800) connected to the second transceiving module (700), the switching module (600), and the first antenna; and
a second combiner (900) connected to the receiving module (300) and the second antenna.

11. The radio-frequency system according to claim 10, wherein:
the receiving module (300) has two antenna ports, one of the two antenna ports being configured to receive the radio-frequency signals in the plurality of low frequency bands, and the other of the two antenna ports being configured to receive the 5G signals in the predetermined frequency bands;
the first combiner (800) has two first terminals respectively connected to the second transceiving module (700) and the switching module (600), and a second terminal connected to the first antenna; and
the second combiner (900) has two first terminals connected to the two antenna ports of the receiving module (300) in one-to-one correspondence, and a second terminal connected to the second antenna.

12. The radio-frequency system according to claim 1, wherein the four predetermined frequency bands comprise N1, N3, N7, and N41 frequency bands.

13. The radio-frequency system according to claim 1, wherein the first MIMO receiving module (400) and the second MIMO receiving module (500) are both a 5G New Radio , NR, Discontinuous Reception , DRX, device.

14. A communication device, comprising the radio-frequency system according to any one of claims 1 to 13.

## Patentansprüche

1. Hochfrequenzsystem, umfassend:
einen Hochfrequenz-Sendeempfänger (100);
ein erstes Sendeempfangsmodul (200);
ein Empfangsmodul (300);
ein erstes Multiple-Input-Multiple-Output-(MIMO)-Empfangsmodul (400);
ein zweites MIMO-Empfangsmodul (500);
eine erste Antenne;
eine zweite Antenne;
eine dritte Antenne; und
eine vierte Antenne, wobei:
der Hochfrequenz-Sendeempfänger (100) über das erste Sendeempfangsmodul (200) mit der ersten Antenne verbunden ist, um einen ersten MIMO-Empfangskanal für Signale der Mobilkommunikationstechnologie der 5. Generation (5G) zu bilden;
der Hochfrequenz-Sendeempfänger (100) über das Empfangsmodul (300) mit der zweiten Antenne verbunden ist, um einen zweiten MIMO-Empfangskanal für 5G-Signale zu bilden, wobei jedes des ersten Sendeempfangsmoduls (200) und des Empfangsmoduls (300) mindestens vier Empfangspfade aufweist, die konfiguriert sind, den Empfang von 5G-Signalen in vier vorbestimmten Frequenzbändern zu unterstützen;
der Hochfrequenz-Sendeempfänger (100) über das erste MIMO-Empfangsmodul (400) mit der dritten Antenne verbunden ist, um einen dritten MIMO-Empfangskanal für 5G-Signale zu bilden; und
der Hochfrequenz-Sendeempfänger (100) über das zweite MIMO-Empfangsmodul (500) mit der vierten Antenne verbunden ist, um einen vierten MIMO-Empfangskanal für 5G-Signale zu bilden, wobei jedes des ersten MIMO-Empfangsmoduls (400) und des zweiten MIMO-Empfangsmoduls (500) vier Empfangspfade aufweist, die konfiguriert sind, den Empfang von 5G-Signalen in den vier vorbestimmten Frequenzbändern zu unterstützen;
wobei das erste Sendeempfangsmodul (200) weiter eine Vielzahl von Sendekanälen aufweist, die konfiguriert sind, eine Sendung von 5G-Signalen in einer Vielzahl von vorbestimmten Frequenzbändern zu unterstützen; und
wobei das Hochfrequenzsystem weiter umfasst:
ein Schaltmodul (600), das mit dem ersten Sendeempfangsmodul (200), dem Empfangsmodul (300), dem ersten MIMO-Empfangsmodul (400), dem zweiten MIMO-Empfangsmodul (500), der ersten Antenne, der zweiten Antenne, der dritten Antenne und der vierten Antenne verbunden ist, wobei das Schaltmodul (600) konfiguriert ist, einen Sendepfad zwischen dem Hochfrequenz-Sendeempfänger (100) und jeder der ersten Antenne, der zweiten Antenne, der dritten Antenne und der vierten Antenne einzuschalten, wodurch das Hochfrequenzsystem aktiviert wird, um die Funktion eines 1T4R-Sounding-Reference-Signals, SRS, zu unterstützen.

2. Hochfrequenzsystem nach Anspruch 1, wobei:
jedes des ersten MIMO-Empfangsmoduls (400) und des zweiten MIMO-Empfangsmoduls (500) einen Antennenanschluss und vier Empfangsanschlüsse aufweist;
jedes des ersten MIMO-Empfangsmoduls (400) und des zweiten MIMO-Empfangsmoduls (500) eine erste Schalteinheit (410) und vier Filtereinheiten (420) umfasst;
die erste Schalteinheit (410) ein erstes Endgerät, das mit dem Antennenanschluss verbunden ist, und eine Vielzahl zweiter Endgeräte aufweist, wobei jedes von einigen der Vielzahl zweiter Endgeräte über eine der vier Filtereinheiten (420) mit einem der vier Empfangsanschlüsse verbunden ist; und
die Frequenzbänder der von den vier Filtereinheiten (420) ausgegebenen Hochfrequenzsignalen sich voneinander unterscheiden.

3. Hochfrequenzsystem nach Anspruch 2, wobei die erste Schalteinheit (410) ein Single-Pole-Four-Throw- (SP4T), SP4T-Schalter ist.

4. Hochfrequenzsystem nach Anspruch 2, wobei jedes des ersten MIMO-Empfangsmoduls (400) und des zweiten MIMO-Empfangsmoduls (500) weiter einen Abfrage-Sendeanschluss aufweist und wobei die übrigen zweiten Endgeräte der Vielzahl zweiter Endgeräte der ersten Schalteinheit (410) mit dem Abfrage-Sendeanschluss verbunden sind, und
die erste Schalteinheit (410) vorzugsweise ein Single-Pole-Five-Throw-, S5PT, Schalter ist.

5. Hochfrequenzsystem nach Anspruch 2, wobei jedes des ersten MIMO-Empfangsmoduls (400) und des zweiten MIMO-Empfangsmoduls (500) weiter umfasst:
eine zweite Schalteinheit (430), die vier erste Endgeräte und vier zweite Endgeräte aufweist, wobei die vier ersten Endgeräte in Eins-zu-Eins-Entsprechung mit den vier Filtereinheiten (420) verbunden sind und die vier zweiten Endgeräte in Eins-zu-Eins-Entsprechung mit den vier Empfangsanschlüssen verbunden sind, und
die zweite Schalteinheit (430) vorzugsweise ein Four-Pole-Four-Throw-, 4P4T, Schalter ist.

6. Hochfrequenzsystem nach Anspruch 1, wobei:
jedes des ersten MIMO-Empfangsmoduls (400) und des zweiten MIMO-Empfangsmoduls (500) einen Antennenanschluss und einen Abfrage-Sendeanschluss aufweist;
das Schaltmodul (600) eine dritte Schalteinheit (610), die zwei erste Endgeräten und vier zweite Endgeräten aufweist, umfasst; und
die zwei ersten Endgeräte der dritten Schalteinheit (610) in Eins-zu-Eins-Entsprechung mit zwei Antennenanschlüssen des ersten Sendeempfangsmoduls (200) verbunden sind, wobei eines der vier zweiten Endgeräte der dritten Schalteinheit (610) mit der ersten Antenne verbunden ist, ein anderes der vier zweiten Endgeräte der dritten Schalteinheit (610) über das Empfangsmodul (300) mit der zweiten Antenne verbunden ist, noch ein anderes der vier zweiten Endgeräte der dritten Schalteinheit (610) mit dem Abfrage-Sendeanschluss des ersten MIMO-Empfangsmoduls (400) verbunden ist und noch ein anderes der vier zweiten Endgeräte der dritten Schalteinheit (610) mit dem Abfrage-Sendeanschluss des zweiten MIMO-Empfangsmoduls (500) verbunden ist, wobei der Antennenanschluss des ersten MIMO-Empfangsmoduls (400) mit der dritten Antenne verbunden ist und der Antennenanschluss des zweiten MIMO-Empfangsmoduls (500) mit der vierten Antenne verbunden ist, wodurch das Hochfrequenzsystem aktiviert wird, um die 1T4R-SRS-Funktion zu unterstützen.

7. Hochfrequenzsystem nach Anspruch 1, wobei:
das Schaltmodul (600) eine vierte Schalteinheit (620), eine fünfte Schalteinheit (630) und eine sechste Schalteinheit (640) umfasst;
die vierte Schalteinheit (620) zwei erste Endgeräte, die in Eins-zu-Eins-Entsprechung mit zwei Antennenanschlüssen des ersten Sendeempfangsmoduls (200) verbunden sind, und vier zweite Endgeräte aufweist, wobei eins der vier Endgeräte der vierten Schalteinheit (620) mit der ersten Antenne verbunden ist, ein anderes der vier zweiten Endgeräte der vierten Schalteinheit (620) über das Empfangsmodul (300) mit der zweiten Antenne verbunden ist, noch ein anderes der vier zweiten Endgeräte der vierten Schalteinheit (620) über die fünfte Schalteinheit (630) mit der dritten Antenne verbunden ist und noch ein anderes der vier zweiten Endgeräte der vierten Schalteinheit (620) über die sechste Schalteinheit (640) mit der vierten Antenne verbunden ist;
die fünfte Schalteinheit (630) auf dem vierten MIMO-Empfangskanal angeordnet und mit dem ersten MIMO-Empfangsmodul (400) verbunden ist; und
die sechste Schalteinheit (640) auf dem vierten MIMO-Empfangskanal angeordnet und mit dem zweiten MIMO-Empfangsmodul (500) verbunden ist.

8. Hochfrequenzsystem nach Anspruch 7, wobei:
die fünfte Schalteinheit (630) zwei erste Endgeräte, die in Eins-zu-Eins-Entsprechung mit der vierten Schalteinheit (620) und dem Antennenanschluss des ersten MIMO-Empfangsmoduls (400) verbunden sind, und ein zweites Endgerät, das mit der dritten Antenne verbunden ist, aufweist; und
die sechste Schalteinheit (640) zwei erste Endgeräte, die in Eins-zu-Eins-Entsprechung mit der vierten Schalteinheit (620) und dem Antennenanschluss des zweiten MIMO-Empfangsmoduls (500) verbunden sind, und ein zweites Endgerät, das mit der vierten Antenne verbunden ist, aufweist.

9. Hochfrequenzsystem nach Anspruch 6 oder 7, wobei:
das Empfangsmodul (300) einen Antennenanschluss und einen Sendeanschluss aufweist;
das Empfangsmodul (300) eine siebte Schalteinheit (310) und eine Vielzahl von Empfangsschaltungen umfasst;
die siebte Schalteinheit (310) ein erstes Endgerät, das über den Antennenanschluss mit der zweiten Antenne verbunden ist, und eine Vielzahl zweiter Anschlüsse aufweist, wobei ein Teil der Vielzahl zweiter Endgeräte der siebten Schalteinheit (310) in Eins-zu-Eins-Entsprechung mit der Vielzahl von Empfangsschaltungen verbunden ist und eines der Vielzahl zweiter Endgeräte, außer dem Teil der Vielzahl zweiter Endgeräte der siebten Schalteinheit (310), mit dem Sendeanschluss verbunden ist.

10. Hochfrequenzsystem nach Anspruch 1, wobei das Empfangsmodul (300) weiter konfiguriert ist, den Empfang von Hochfrequenzsignalen in einer Vielzahl von Niederfrequenzbändern zu unterstützen; und
wobei das Hochfrequenzsystem weiter umfasst:
ein zweites Sendeempfangsmodul (700), das mit dem Hochfrequenz-Sendeempfangsmodul (100) und dem ersten Sendeempfangsmodul (200) verbunden ist, wobei das zweite Sendeempfangsmodul (700) konfiguriert ist, den Empfang und die Sendung der Hochfrequenzsignale in der Vielzahl der Niederfrequenzbänder zu unterstützen;
einen ersten Kombinator (800), der mit dem zweiten Sendeempfangsmodul (700), dem Schaltmodul (600) und der ersten Antenne verbunden ist; und
einen zweiten Kombinator (900), der mit dem Empfangsmodul (300) und der zweiten Antenne verbunden ist.

11. Hochfrequenzsystem nach Anspruch 10, wobei:
das Empfangsmodul (300) zwei Antennenanschlüsse aufweist, wobei einer der zwei Antennenanschlüsse konfiguriert ist, die Hochfrequenzsignale in der Vielzahl von Niederfrequenzbändern zu empfangen, und der andere der zwei Antennenanschlüsse konfiguriert ist, die 5G-Signale in den vorbestimmten Frequenzbändern zu empfangen;
der erste Kombinator (800) zwei erste Endgeräte, die jeweils mit dem zweiten Sendeempfangsmodul (700) und dem Schaltmodul (600) verbunden sind, und ein zweites Endgerät, das mit der ersten Antenne verbunden ist, aufweist; und
der zweite Kombinator (900) zwei erste Endgeräte, die in Eins-zu-Eins-Entsprechung mit den zwei Antennenanschlüssen des Empfangsmoduls (300) verbunden sind, und ein zweites Endgerät, das mit der zweiten Antenne verbunden ist, aufweist.

12. Hochfrequenzsystem nach Anspruch 1, wobei die vier vorbestimmten Frequenzbänder die Frequenzbänder N1, N3, N7 und N41 umfassen.

13. Hochfrequenzsystem nach Anspruch 1, wobei das erste MIMO-Empfangsmodul (400) und das zweite MIMO-Empfangsmodul (500) beide eine Vorrichtung für 5G New Radio, NR, Discontinuous Reception, DRX, sind.

14. Kommunikationsvorrichtung, umfassend das Hochfrequenzsystem nach einem der Ansprüche 1 bis 13.

## Revendications

1. Système à radiofréquence comprenant :
un émetteur-récepteur à radiofréquence (100) ;
un premier module d'émission-réception (200) ;
un module de réception (300) ;
un premier module de réception à entrées multiples et sorties multiples (MIMO) (400) ;
un second module de réception MIMO (500) ;
une première antenne ;
une deuxième antenne ;
une troisième antenne ; et
une quatrième antenne, dans lequel :
l'émetteur-récepteur à radiofréquence (100) est relié à la première antenne via le premier module d'émission-réception (200) pour former un premier canal de réception MIMO pour les signaux de la technologie de communication mobile de 5e génération (5G) ;
l'émetteur-récepteur à radiofréquence (100) est relié à la deuxième antenne via le module de réception (300) pour former un deuxième canal de réception MIMO pour les signaux 5G, dans lequel chacun du premier module d'émission-réception (200) et du module de réception (300) présente au moins quatre chemins de réception configurés pour prendre en charge la réception de signaux 5G dans quatre bandes de fréquences prédéterminées ;
l'émetteur-récepteur à radiofréquence (100) est relié à la troisième antenne via le premier module de réception MIMO (400) pour former un troisième canal de réception MIMO pour les signaux 5G ; et
l'émetteur-récepteur à radiofréquence (100) est relié à la quatrième antenne via le second module de réception MIMO (500) pour former un quatrième canal de réception MIMO pour les signaux 5G, dans lequel chacun du premier module de réception MIMO (400) et du second module de réception MIMO (500) présente quatre chemins de réception configurés pour prendre en charge la réception de signaux 5G dans les quatre bandes de fréquences prédéterminées ;
dans lequel le premier module d'émission-réception (200) présente en outre une pluralité de canaux d'émission configurés pour prendre en charge l'émission de signaux 5G dans une pluralité de bandes de fréquences prédéterminées ; et
dans lequel le système à radiofréquence comprend en outre :
un module de commutation (600) relié au premier module d'émission-réception (200), au module de réception (300), au premier module de réception MIMO (400), au second module de réception MIMO (500), à la première antenne, à la deuxième antenne, à la troisième antenne et à la quatrième antenne, le module de commutation (600) étant configuré pour commuter sur un chemin d'émission entre l'émetteur-récepteur à radiofréquence (100) et chacune de la première antenne, de la deuxième antenne, de la troisième antenne et de la quatrième antenne, permettant au système à radiofréquence de prendre en charge une fonction de signal de référence de sondage, SRS, 1T4R.

2. Système à radiofréquence selon la revendication 1, dans lequel :
chacun du premier module de réception MIMO (400) et du second module de réception MIMO (500) présente un port d'antenne et quatre ports de réception ;
chacun du premier module de réception MIMO (400) et du second module de réception MIMO (500) comprend une première unité de commutation (410) et quatre unités de filtrage (420) ;
la première unité de commutation (410) présente une première borne reliée au port d'antenne et une pluralité de secondes bornes, chacune de certaines de la pluralité de secondes bornes étant reliée à l'un des quatre ports de réception via l'une des quatre unités de filtrage (420) ; et
des bandes de fréquences des signaux à radiofréquence émis par les quatre unités de filtrage (420) sont différentes les unes des autres.

3. Système à radiofréquence selon la revendication 2, dans lequel la première unité de commutation (410) est un commutateur unipolaire à quatre positions, SP4T (SP4T).

4. Système à radiofréquence selon la revendication 2, dans lequel chacun du premier module de réception MIMO (400) et du second module de réception MIMO (500) présente en outre un port d'émission par interrogation, et dans lequel les secondes bornes restantes de la pluralité de secondes bornes de la première unité de commutation (410) sont reliées au port d'émission par interrogation, et
de préférence, la première unité de commutation (410) est un commutateur unipolaire à cinq positions, S5PT.

5. Système à radiofréquence selon la revendication 2, dans lequel chacun du premier module de réception MIMO (400) et du second module de réception MIMO (500) comprend en outre :
une deuxième unité de commutation (430) présentant quatre premières bornes et quatre secondes bornes, les quatre premières bornes étant reliées aux quatre unités de filtrage (420) en correspondance biunivoque, et les quatre secondes bornes étant reliées aux quatre ports de réception en correspondance biunivoque, et
de préférence, le deuxième unité de commutation (430) est un commutateur à quatre pôles et quatre positions, 4P4T.

6. Système à radiofréquence selon la revendication 1, dans lequel :
chacun du premier module de réception MIMO (400) et du second module de réception MIMO (500) présente un port d'antenne et un port d'émission par interrogation ;
le module de commutation (600) comprend une troisième unité de commutation (610) présentant deux premières bornes et quatre secondes bornes ; et
les deux premières bornes de la troisième unité de commutation (610) sont reliées à deux ports d'antenne du premier module d'émission-réception (200) en correspondance biunivoque, une des quatre secondes bornes de la troisième unité de commutation (610) est reliée à la première antenne, une autre des quatre secondes bornes de la troisième unité de commutation (610) est reliée à la deuxième antenne via le module de réception (300), une autre des quatre secondes bornes de la troisième unité de commutation (610) est reliée au port d'émission par interrogation du premier module de réception MIMO (400), une autre des quatre secondes bornes de la troisième unité de commutation (610) est reliée au port d'émission par interrogation du second module de réception MIMO (500), le port d'antenne du premier module de réception MIMO (400) est relié à la troisième antenne, et le port d'antenne du second module de réception MIMO (500) est relié à la quatrième antenne, permettant ainsi au système à radiofréquence de prendre en charge la fonction SRS 1T4R.

7. Système à radiofréquence selon la revendication 1, dans lequel :
le module de commutation (600) comprend une quatrième unité de commutation (620), une cinquième unité de commutation (630) et une sixième unité de commutation (640) ;
la quatrième unité de commutation (620) présente deux premières bornes reliées à deux ports d'antenne du premier module d'émission-réception (200) en correspondance biunivoque, et quatre secondes bornes, une des quatre secondes bornes de la quatrième unité de commutation (620) étant reliée à la première antenne, une autre des quatre secondes bornes de la quatrième unité de commutation (620) étant reliée à la deuxième antenne via le module de réception (300), une autre des quatre secondes bornes de la quatrième unité de commutation (620) étant reliée à la troisième antenne via la cinquième unité de commutation (630), et encore une autre des quatre secondes bornes de la quatrième unité de commutation (620) étant reliée à la quatrième antenne via la sixième unité de commutation (640) ;
la cinquième unité de commutation (630) est disposée sur le quatrième canal de réception MIMO et reliée au premier module de réception MIMO (400) ; et
la sixième unité de commutation (640) est disposée sur le quatrième canal de réception MIMO et reliée au second module de réception MIMO (500).

8. Système à radiofréquence selon la revendication 7, dans lequel :
la cinquième unité de commutation (630) présente deux premières bornes reliées à la quatrième unité de commutation (620) et au port d'antenne du premier module de réception MIMO (400) en correspondance biunivoque, et une seconde borne reliée à la troisième antenne ; et
la sixième unité de commutation (640) présente deux premières bornes reliées à la quatrième unité de commutation (620) et au port d'antenne du second module de réception MIMO (500) en correspondance biunivoque, et une seconde borne reliée à la quatrième antenne.

9. Système à radiofréquence selon la revendication 6 ou 7, dans lequel :
le module de réception (300) présente un port d'antenne et un port d'émission ;
le module de réception (300) comprend une septième unité de commutation (310) et une pluralité de circuits de réception ;
la septième unité de commutation (310) présente une première borne reliée à la deuxième antenne via le port d'antenne, et une pluralité de secondes bornes, une partie de la pluralité de secondes bornes de la septième unité de commutation (310) étant reliée à la pluralité de circuits de réception en correspondance biunivoque, et l'une de la pluralité de secondes bornes autre que la partie de la pluralité de secondes bornes de la septième unité de commutation (310) étant reliée au port d'émission.

10. Système à radiofréquence selon la revendication 1, dans lequel le module de réception (300) est en outre configuré pour prendre en charge la réception de signaux à radiofréquence dans une pluralité de bandes de basses fréquences ; et
dans lequel le système à radiofréquence comprend en outre :
un second module d'émission-réception (700) relié à l'émetteur-récepteur à radiofréquence (100) et au premier module d'émission-réception (200), le second module d'émission-réception (700) étant configuré pour prendre en charge la réception et l'émission des signaux à radiofréquence dans la pluralité de bandes de basses fréquences ;
un premier combinateur (800) relié au second module d'émission-réception (700), au module de commutation (600) et à la première antenne ; et
un second combinateur (900) relié au module de réception (300) et à la deuxième antenne.

11. Système à radiofréquence selon la revendication 10, dans lequel :
le module de réception (300) présente deux ports d'antenne, l'un des deux ports d'antenne étant configuré pour recevoir les signaux à radiofréquence dans la pluralité de bandes de basses fréquences, et l'autre des deux ports d'antenne étant configuré pour recevoir les signaux 5G dans les bandes de fréquences prédéterminées ;
le premier combinateur (800) présente deux premières bornes respectivement reliées au second module d'émission-réception (700) et au module de commutation (600), et une seconde borne reliée à la première antenne ; et
le second combinateur (900) présente deux premières bornes reliées aux deux ports d'antenne du module de réception (300) en correspondance biunivoque, et une seconde borne reliée à la deuxième antenne.

12. Système à radiofréquence selon la revendication 1, dans lequel les quatre bandes de fréquences prédéterminées comprennent les bandes de fréquences N1, N3, N7 et N41.

13. Système à radiofréquence selon la revendication 1, dans lequel le premier module de réception MIMO (400) et le second module de réception MIMO (500) sont tous deux un dispositif 5G New Radio, NR, à réception discontinue, DRX.

14. Dispositif de communication, comprenant le système à radiofréquence selon l'une quelconque des revendications 1 à 13.
